# EUROPEAN PATENT APPLICATION

(11) **EP 1 777 434 A1**
(43) Date of publication of application: **25.04.2007**
(21) Application number: 06291610.1
(22) Date of filing: 16.10.2006
(51) Int. Cl.: F16F 13/10

(54) **Hydraulic antivibration device**

(30) Priority: 21.10.2005 US 255581
(71) Applicant: Paulstra CRC, Grand Rapids, MI 49501 (US)
(72) Inventor: Noe, Frédéric, Grand Rapids, MI 49546 (US)
(74) Representative: Burbaud, Eric

(57) **Abstract**

The invention relates to a hydraulic antivibration device having two rigid strength members (1,2) interconnected by an elastomer body (3) partly defining a working chamber (A), a compensation chamber (B) partly defined by a flexible wall (4), and a cover (5) covering the flexible wall. It is characterized in that the flexible wall has a peripheral area integral with the rim.

## Description

### FIELD OF THE INVENTION

The present invention relates to hydraulic antivibration devices intended to be interposed for linking and damping purposes between two rigid elements such as a vehicle chassis and its engine.

More particularly, amongst such devices, the invention relates to those which comprise:
- first and second rigid members for connecting the two elements to be united;
- an elastomer body extending between an end secured to said first rigid member, and a base secured to said second rigid member;
- a working chamber partly defined by said elastomer body, and filled with liquid;
- a compensation chamber partly defined by a freely deformable, flexible wall, said compensation chamber being filled with liquid;
- a rigid partition separating the working chamber from the compensation chamber;
- a throttled passage putting the two chambers in communication with each other;
- a cover, including a bottom and a lateral annular wall, comprising an inside surface substantially cup shaped.

### BACKGROUND OF THE INVENTION

Such hydraulic antivibration devices are disclosed, for example, in document US-A-5 833 219. These devices necessitate the assembly of a protective element, normally in the form of a cover, over the flexible wall (also referred to as a "bellows"). It is normally molded onto a separate armature for positioning the flexible wall in place with respect to the rigid partition, to the elastomer body and to the second rigid element.

A particular object of the present invention is to further improve and simplify the manufacturing and assembly of such hydraulic antivibration devices.

To this end, according to the invention, in a hydraulic antivibration device of the kind in question, the flexible wall has a peripheral area which is integral with the lateral annual wall of the cover.

By means of these dispositions, the overall number of components is reduced, the assembly operation of the protective cover is eliminated, and the overall volume available for the movement of the bellows may be increased.

The antivibration device of the present invention may thus be both simpler, cheaper to manufacture, and more efficient than conventional antivibration devices.

In preferred embodiments, it is possible to use one or more of the following dispositions:
- said cover further comprises a rim extending radially outwardly from said lateral annular wall with respect to said central axis, said rim being covered by said peripheral area of the flexible wall and said peripheral area of the flexible wall being pressed at least between said rim and said rigid partition;
- the peripheral area of the flexible wall and the rim of the cover are joined together by a permanent connection;
- said permanent connection is chosen in the group consisting of: over-molding, adhesive connection and mechanical interconnection;
- said rim includes two opposite main faces and a plurality of holes extending between said two opposite main faces, said flexible wall penetrating fully inside said plurality of holes and extending at least partly over said two opposite main faces of the rim;
- said cover further comprises an air passage such that a volume defined by said flexible wall and said inside surface of said cover is in connection with the atmosphere;
- the material of said flexible wall is an elastomer;
- said elastomer is chosen from a group consisting of: thermoplastics, natural rubbers, and synthetic substances, and more specifically Vegaprene®;
- said flexible wall is molded directly to said inside surface of said cover;
- the material of said cover has no natural adherence to said flexible wall;
- said cover is made out of a material chosen in the group consisting of: synthetic compounds, and metals;

Besides, another object of the present invention is a method of manufacturing a hydraulic antivibration device for interposing between two rigid elements, said antivibration device comprising:
- first and second rigid members for connecting the two elements to be united;
- an elastomer body extending about a central axis between an end secured to said first rigid member, and a base secured to said second rigid member;
- a working chamber partly defined by said elastomer body, and filled with liquid;
- a compensation chamber partly defined by a freely deformable, flexible wall, said compensation chamber being filled with liquid;
- a rigid partition separating the working chamber from the compensation chamber, said partition comprising a passage putting the two chambers in communication with each other;
- a cover, including a base and a lateral annular wall, comprising an inside surface substantially cup shaped, said cover covering said flexible wall and the lateral annular wall of said cover being secured to the second rigid member, said flexible wall having a peripheral area which is integral with said lateral annular wall of said cover,
said method comprising at least a step of:
(a) molding said flexible wall in an internal volume partially delimitated by said internal wall of said cover.
   In a variant of the above method, the flexible wall molded on the cover in step (a) has no adherence to said cover outside the peripheral area of said flexible wall; and said method further includes at least the following steps, after step (a):
(b) assembling the second rigid member, the partition and the cover together, thereby delimiting an interior volume defining said working chamber, said compensation chamber and said throttled passage;
(c) putting said interior volume in a vacuum, thereby separating the flexible wall from the interior surface of the cover outside said peripheral area of the flexible wall;
(d) replacing said vacuum with a predetermined amount of liquid;
(e) sealing said interior volume.

In what follows, a preferred embodiment of the invention will be described with reference to the accompanying drawings in a way which is of course not limitative.

### BRIEF DESCRIPTION OF THE DRAWINGS

Other characteristics and advantages of the invention appear from the following detailed description of two embodiments thereof, given as non-limitative examples and with reference to the accompanying drawings, in which:
- figure 1 is a vertical sectional view through an antivibration support according to an embodiment of the invention,
- figure 2 shows a detail of figure 1,
- figure 3 is a similar view to figure 2, in an embodiment where the flexible wall is overmolded on the rim,
- figure 4 is a similar view to figure 1, showing the assembled device during manufacture thereof, after the flexible wall has been molded onto the cover, but before the liquid is introduced in the device; and
- figure 5 shows the subsequent step after the vacuum has been established.

### DETAILED DESCRIPTION

In the various figures the same references designate elements that are identical or similar.

Also, in the following description, terms such as "up", "down", "top", "bottom", "base", "vertical", "horizontal", are used solely to make the description simpler and clearer, and they refer to the normal positional views of the device of the invention, but such terms are not limitating.

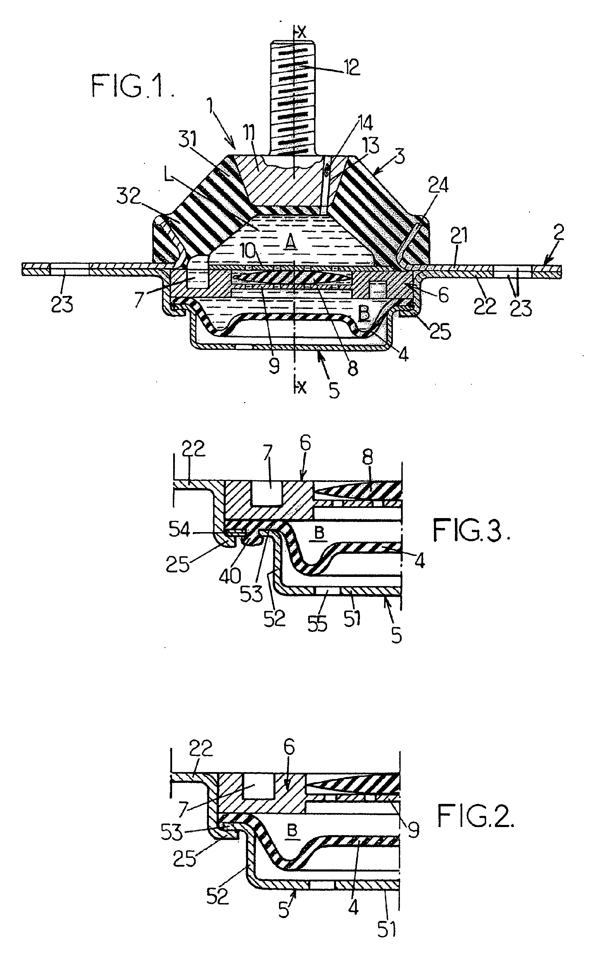

The hydraulic antivibration device shown in figure 1, comprises a first rigid strength member 1 and a second rigid strength member 2. Both first and second strength members are predisposed for attaching between external bodies for support or dampening. In the particular embodiment shown here:
- the first rigid strength member 1 comprises a rigid base 11 and an upwardly extending stud 12 used for fixing onto a support,
- and the second rigid element 2 is in the form of a rigid ring formed by two superposed annular plates 21, 22 welded together, and disposed with a plurality of attachment points 23.

The antivibration device further includes an elastomer body 3, the elastomer body being bell shaped and extending about a central axis X between:
- a top 31 which is overmolded on the base 11 of the first rigid strength member,
- and an annular base 32 which is overmolded on an upwardly bent annular portion 24 of the upper plate 21 of the second rigid strength member.

The elastomer body presents sufficient compression strength to be able to take up the static and dynamic forces of the supportable external bodies.

A rigid partition 6 is further disposed and secured to the base 32 of the elastomer body 3, and to the second strength member 2. This rigid partition 6 may define a constricted passage 7, allowing fluidic communication from one face of the rigid partition 6 to the other face, disposed for instance along the periphery of said rigid partition. The rigid partition 6 may also include, a decoupling valve 8 for further filtering vibrations of low amplitude and relatively high frequency, as it is well known in the art. In such case, the rigid partition 6 may comprise upper and lower flat perforated plates 9, 10 for limiting the movement of the valve 8.

A flexible wall 4, is further positioned sealingly against the rigid partition 6, thus defining a sealed volume, filled with liquid, between the elastomer body 3 and the flexible wall 4, said sealed volume forming:
- a working chamber A defined by the volume between the elastomer body and the rigid partition,
- and a compensation chamber B defined by the volume between the rigid partition and the flexible wall.

The flexible wall 4 is made from a deformable, preferably resilient material. It may for example be an elastomer reinforced or not by an appropriate fabric. The elastomer material may for instance be Vegaprene®, natural rubber, a synthetic material or a thermoplastic elastomer.

The flexible wall is covered by a cover 5, and integrally connected to the flexible wall 8. The cover may be made for instance out of a metallic or plastic material. The metallic materials may for instance be steel, aluminium, or other appropriate metallic materials.

As shown in more details on figure 2, the cover 5 is substantially cup-shaped, symmetrical about a central axis X, comprising a horizontal base 51 and a lateral annular wall 52 extending upwardly from the base 51, and followed by a substantially horizontal rim 53 extending outwardly from the lateral annular wall 52 with respect to the central axis X.

In the base 51 is contained an air-passage 55 suitable for pressure equalization during operation of the device when the volume defined between the flexible wall 5 and the cover 5 is changing. The inside surfaces of the base 51, the annular wall 52 and the rim 53 are suitable to be used as one delimitating surface of a mold in which the flexible wall 4 will be molded.

The rim 53 has the dual purpose of integrating the flexible wall 4 as well as to properly dispose the rim 53 and the flexible wall 4 to establish a leak proof separation of the internal volume of the device together with the second rigid element 2 when pressed against the rigid partition 6. To this end, the upper surface of the rim 53 is bonded to the periphery of the flexible wall 4, and said rim is clamped against the partition 6 by crimped tabs 25 belonging to the lower plate 22 of the second rigid strength member 2, with interposition of the periphery of the flexible wall 4 between said rim and said partition.

It should be noted that, alternatively, the periphery of the flexible wall 4 may be connected to the rim by any permanent connection other than adhesion, such as over-molding and mechanical interconnection. For example, as shown on figure 3, the rim 53 may include a plurality of holes 54 extending between the two opposite main faces of the rim, and said flexible wall penetrates fully inside said plurality of holes 54 and extends at least partly over said two opposite main faces of the rim (in the example of figure 3, the flexible wall 4 entirely covers the upper face of the rim 53 and forms mushroom shaped protrusions 40 under the lower face of the rim.

The operation of the antivibration device described above is as follows: when vibratory axial movements of relatively low frequency (e.g. lower than 20 Hz) and relatively high amplitude (e.g. higher than 1 mm) are applied between the first rigid strength member 1 and the second rigid strength member 2, the elastomer body 3 flexes, causing the transfer of liquid from the working chamber A into the compensation chamber B through the restricted passage 7. This movement of liquid damps the vibrations applied to the strength members 1, 2, with a particular efficiency in the vicinity of a resonance frequency of the restricted passage 7.

When vibratory axial movements of relatively high frequency (e.g. higher than 20 Hz) and relatively low amplitude (e.g. lower than 1 mm) are applied between the two rigid strength members, these movements are filtered by the decoupling valve 8, as it is well known in the art.

The assembling process of the antivibration device may include a step of providing a subassembly consisting of:
- the first rigid strength member 1 and the second rigid strength member 2 connected together by the bell shaped elastomer body 3,
- and the partition 6, fitting snugly and sealingly in the base 32 of the elastomer body.

Besides, this assembling process also includes a step of:
- inserting the cover 5 in a die, thus defining an internal volume partially delimitated by the die and by the internal wall of the cover 5,
- molding said flexible wall 4 in this internal volume.

Preferably, the materials of the flexible wall 4 and of the cover 5 are chosen so that these two parts do not adhere naturally to one another after molding of the flexible wall. Such adherence only occurs on the upper surface of the rim 53 which has been coated with a bonding agent before molding.

In the variant of figure 3, bonding agent may or may not be used, since the elastomer of the flexible wall flows in the holes 54 and creates a permanent mechanical connection between the flexible wall 4 and the rim 53.

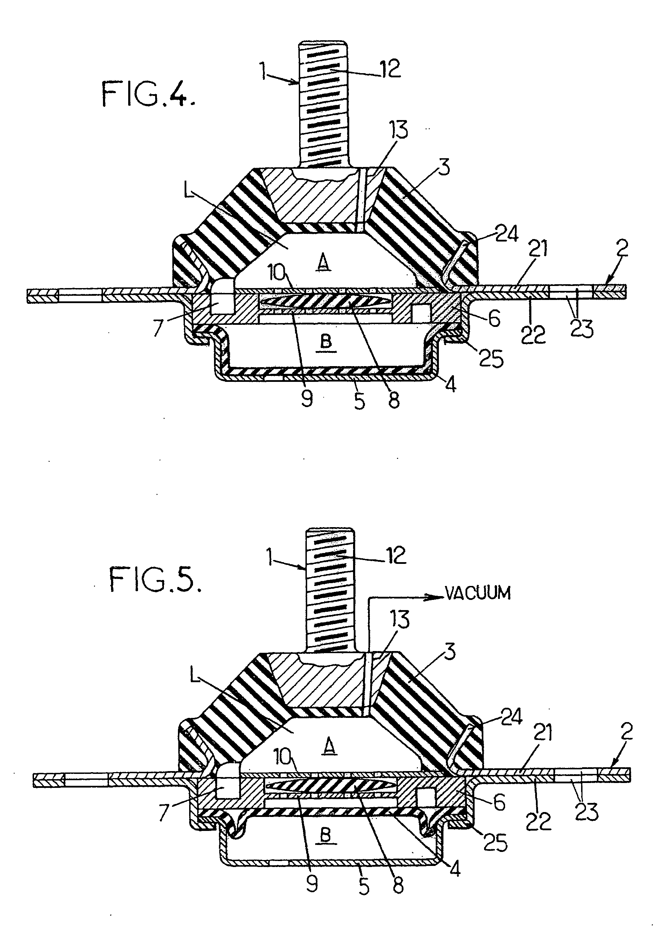

After molding of the flexible wall 4 on the inner surface of the cover 5, the subassembly comprising the cover and the flexible wall is sealingly assembled to the above-mentioned subassembly comprising the two strength members 1, 2, the elastomer body 3 and the partition 6, thus defining the internal volume which is meant to receive liquid, as shown in figure 4. At this step, this internal volume is not sealed, but instead communicates with the atmosphere through a perforation 13. Perforation 13 may for instance be drilled in the base 11 of the first strength member 1 and in the top 31 of the elastomer body.

Then, said perforation is connected to a vacuum source and said internal volume is thus put in a vacuum, thereby separating the flexible wall from the interior surface of the cover outside said peripheral area of the flexible wall, as shown in figure 5.

Afterwards, liquid is injected in said interior volume for replacing said vacuum with liquid, and said interior volume is finally sealed, for instance by inserting a plug 14 in the perforation 13 (see figure 1). More specifically, the vacuum is replaced by a very specific volume of liquid to permit the whole internal volume comprising of the working chamber A, the compensation chamber B, and the constricted passage 7 to be filled with liquid, free from air bubbles, and to permit the free movement of the flexible wall 4 without itself touching either the rigid partition 6 or the cover 5.

One example of such process of putting the internal volume under vacuum, injecting liquid therein and sealing this volume, is described for instance in document JP-A-1 790 487.

An alternative method of filling the hydraulic antivibration device is by performing the assembly operation of the whole device submersed in a liquid bath with a precompressed elastomer body 3. Once assembled and sealed, the elastomer body 3 can be allowed to return to its natural state, and in the process thus separating the flexible wall 4 from the cover 5.

## Claims

1. A hydraulic antivibration device for interposing between two rigid elements, and comprising :
- first and second rigid members for connecting the two elements to be united;
- an elastomer body extending about a central axis between an end secured to said first rigid member, and a base secured to said second rigid member;
- a working chamber partly defined by said elastomer body, and filled with liquid;
- a compensation chamber partly defined by a freely deformable, flexible wall, said compensation chamber being filled with liquid;
- a rigid partition separating the working chamber from the compensation chamber, said partition comprising a passage putting the two chambers in communication with each other;
- a cover, including a base and a lateral annular wall, comprising an inside surface substantially cup shaped, said cover covering said flexible wall and the lateral annular wall of said cover being secured to the second rigid member;
wherein said flexible wall has a peripheral area which is integral with said lateral annular wall of said cover.

2. A hydraulic antivibration device according to claim 1, wherein said cover further comprises a rim extending radially outwardly from said lateral annular wall with respect to said central axis, said rim being covered by said peripheral area of the flexible wall and said peripheral area of the flexible wall being pressed at least between said rim and said rigid partition.

3. A hydraulic antivibration device according to claim 2, wherein the peripheral area of the flexible wall and the rim of the cover are joined together by a permanent connection.

4. A hydraulic antivibration device according to claim 3, wherein said permanent connection is chosen in the group consisting of: over-molding, adhesive connection and mechanical interconnection.

5. A hydraulic antivibration device according to claim 4, wherein said rim includes two opposite main faces and a plurality of holes extending between said two opposite main faces, said flexible wall penetrating fully inside said plurality of holes and extending at least partly over said two opposite main faces of the rim.

6. A hydraulic antivibration device according to claim 1, wherein said cover further comprises an air passage such that a volume defined by said flexible wall and said inside surface of said cover is in connection with the atmosphere.

7. A hydraulic antivibration device according to claim 1, wherein said flexible wall is made out of an elastomer.

8. A hydraulic antivibration device according to claim 7, wherein said elastomer is chosen from a group consisting of: thermoplastics, natural rubbers, and synthetic substances, and more specifically Vegaprene®.

9. A hydraulic antivibration device according to claim 7, wherein said flexible wall is molded directly to said inside surface of said cover.

10. A hydraulic antivibration device according to claim 9, wherein said cover has no natural adherence to said flexible wall.

11. A hydraulic antivibration device according to claim 10, wherein said cover is made out of a material chosen in the group consisting of: synthetic compounds, and metals.

12. A method of manufacturing a hydraulic antivibration device for interposing between two rigid elements, said antivibration device comprising:
- first and second rigid members for connecting the two elements to be united;
- an elastomer body extending about a central axis between an end secured to said first rigid member, and a base secured to said second rigid member;
- a working chamber partly defined by said elastomer body, and filled with liquid;
- a compensation chamber partly defined by a freely deformable, flexible wall, said compensation chamber being filled with liquid;
- a rigid partition separating the working chamber from the compensation chamber, said partition comprising a passage putting the two chambers in communication with each other;
- a cover, including a base and a lateral annular wall, comprising an inside surface substantially cup shaped, said cover covering said flexible wall and the lateral annular wall of said cover being secured to the second rigid member, said flexible wall having a peripheral area which is integral with said lateral annular wall of said cover,
said method comprising at least a step of:
(a) molding said flexible wall in an internal volume partially delimitated by said internal wall of said cover.

13. The method of manufacturing a hydraulic antivibration device according to claim 13, wherein:
- the flexible wall molded on the cover in step (a) has no adherence to said cover outside the peripheral area of said flexible wall; and
- said method further includes at least the following steps, after step (a):
(b) assembling the second rigid member, the partition and the cover together, thereby delimiting an interior volume defining said working chamber, said compensation chamber and said throttled passage;
(c) putting said interior volume in a vacuum, thereby separating the flexible wall from the interior surface of the cover outside said peripheral area of the flexible wall;
(d) replacing said vacuum with a predetermined amount of liquid;
(e) sealing said interior volume.
